(19) Europäisches Patentamt
European Patent Office
Office européen des brevets

(11) EP 4 219 602 B1

(12) EUROPEAN PATENT SPECIFICATION

(45) Date of publication and mention of the grant of the patent:
**29.04.2026 Bulletin 2026/18**

(21) Application number: **22153796.2**

(22) Date of filing: **28.01.2022**

(51) International Patent Classification (IPC):
***C08J 3/00*** *(2006.01)* ***C08J 5/18*** *(2006.01)*
***C08L 23/08*** *(2025.01)*

(52) Cooperative Patent Classification (CPC):
(C-Sets available)
**C08F 210/16; B32B 27/08; B32B 27/32; C08J 5/18; C08L 23/0815;** B32B 2250/242; B32B 2270/00; B32B 2439/70; C08F 4/65912; C08F 4/65916; C08J 2323/08; C08J 2423/06; C08L 2205/035; C08L 2207/066 (Cont.)

(54) **POLYETHYLENE BLEND FOR A FILM LAYER**

POLYETHYLENMISCHUNG FÜR EINE FOLIENSCHICHT

MÉLANGE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Borealis GmbH**
**1020 Vienna (AT)**

(72) Inventors:
- **WANG, Jingbo**
  **4021 Linz (AT)**
- **BERGER, Friedrich**
  **4021 Linz (AT)**

(74) Representative: **TBK**
**Bavariaring 4-6**
**80336 München (DE)**

(56) References cited:
**EP-A1- 3 298 067**
**WO-A1-2021/191019**
**WO-A1-2022/018239**
**US-B2- 10 494 465**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 219 602 B1

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08F 210/16, C08F 210/14, C08F 2500/12, C08F 2500/27, C08F 2500/08;**
**C08L 23/0815, C08L 23/0815, C08L 23/0815;**
C08F 210/16, C08F 210/08, C08F 2500/27, C08F 2500/12;
C08F 210/16, C08F 210/14, C08F 210/08, C08F 2500/27, C08F 2500/12, C08F 2500/26;
C08L 2207/066, C08L 2207/066, C08L 2207/066

## Description

The present invention relates to a polyethylene blend of a specific multimodal metallocene catalysed linear low density polyethylene (mLLDPE) and a specific high density polyethylene, produced in the presence of a Ziegler-Natta catalyt (ZN-HDPE), which provides films with well-balanced properties, especially stiffness/impact balance. Relevant prior art documents are WO 2022/018239 A1, EP 3 298 067 A1, WO 2021/191019 A1 and US 10 494 465 B2.

High standards are nowadays required for packaging materials. Quite often properties are required in the packaging industry, which are conflicting. Typically, high stiffness and toughness are required in parallel, as this leads to less material needed for producing the final product. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry.

Due to the different requirements nowadays multilayer packaging with different type of materials are used, which from one side serve the needs, but from the other side such structures make recycling difficult. Therefore using pure materials is preferred, i.e. a packaging with 'mono-materials', i.e. only polyethylene based polymers, is really appreciated. However, this imposes higher requirement to the performance of materials themselves, a material with balanced performance is therefore highly appreciated.

mLLDPE attracts specific interests due to its excellence balance between cost and performance. The main drawback is that the processability and optics are rather poor. One common way is to blend the mLLDPE with LDPE, however, this is known to worsen other properties, like impact.

As stated above the recycling of packaging material after their first use is an important topic nowadays. It is much more challenging to recycle packaging films made of different materials, e.g. different plastics, than to recycle mono-material solutions. On the other hand, the use of different materials is sometimes necessary to obtain acceptable properties, like mechanical properties.

Therefore, an objective of the present invention is the provision of a polyethylene based mono-material solution, which provides an improved mechanical properties, especially dart drop (impact strength) and an improved balance of stiffness and toughness.

The present inventors have found that a blend of a specific multimodal metallocene catalysed linear low density polyethylene (mLLDPE) and a specific high density polyethylene, produced in the presence of a Ziegler-Natta catalyt (ZN-HDPE), provides films with improved mechanical properties, especially dart drop (impact strength) and an improved balance of stiffness and toughness.

## Summary of Invention

The present invention is therefore directed to a polyethylene blend comprising

a) 55.0 wt% to 99.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of 925 to 965 kg/m$^3$,
a $MFR_2$ (190°C, 2.16 kg, ISO 1133) in the range of 10.0 to 300.0 g/10 min,
a 1-butene content in the range of 0.1 to 3.0 mol%, based on the ethylene-1-butene polymer component (A);

the ethylene-1-hexene polymer component (B) has

a density in the range of 880 to 910 kg/m$^3$,
a $MFR_2$ (190°C, 2.16 kg, ISO 1133) in the range of 0.001 to 1.0 g/10 min
a 1-hexene content in the range of 2.5 to 10.0 mol% based on the ethylene-1-hexene polymer compound (B);

whereby the multimodal metallocene catalysed linear low density polyethylene (mLLDPE) has

a density in the range of 910 to 925 kg/m$^3$,
a $MFR_2$ (190°C, 2.16 kg, ISO 1133) in the range of 0.1 to 5.0 g/10 min, and

b) 1.0 to 45.0 wt%, based on the total weight of the polyethylene blend, of a high density polyethylene, produced in the presence of a Ziegler-Natta catalyst (ZN-HDPE), whereby said ZN-HDPE has

a density in the range of 950 to 975 kg/$m^3$, and
a $MFR_2$ (190°C, 2.16 kg, ISO 1133) in the range of 0.1 to 2.0 g/10 min.

In an embodiment of the present invention, the ethylene-1-butene polymer component (A) of the multimodal metallocene catalysed linear low density polyethylene (mLLDPE) consists of an ethylene polymer fraction (A-1) and an ethylene polymer fraction (A-2).

Unexpectedly the above defined blend of the invention provides improved dart drop (impact strength) and an improved balance of stiffness and toughness to films comprising such blends.

The invention is therefore further direct to films comprising the above defined polyethylene blend.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

For the purpose of the present invention "metallocene catalysed linear low density polyethylene (mLLDPE) which consists of an ethylene-1-butene polymer component (A) and an ethylene-1-hexene polymer component (B)" means that the mLLDPE is produced in an at least 2-stage sequential polymerization process, wherein first component (A) is produced and component (B) is then produced in the presence of component (A) in a subsequent polymerization step, yielding the mLLDPE or vice versa, i.e. first component (B) is produced and component (A) is then produced in the presence of component (B) in a subsequent polymerization step, yielding the mLLDPE.

Term "multimodal" in context of multimodal metallocene catalysed linear low density polyethylene means herein multimodality with respect to melt flow rate (MFR) ) of at least the ethylene polymer components (A) and (B), i.e. the ethylene polymer components (A) and (B), have different MFR values. The multimodal metallocene catalysed linear low density polyethylene can have further multimodality between the ethylene polymer components (A) and (B) with respect to one or more further properties, like density, comonomer type and/or comonomer content, as will be described later below.

**Detailed description of Invention**

The polyethylene blend according to the present invention comprises a) a multimodal metallocene catalysed linear low density polyethylene (mLLDPE) and b) a high density polyethylene, which has been produced in the presence of a Ziegler-Natta catalyst (ZN-HDPE).

Thus the blend comprises

a) 55.0 wt% to 99.0 wt%, preferably 65.0 wt% to 96.0 wt%, more preferably 75.0 wt% to 94.0 wt% and even more preferably 78.0 wt% to 92.0 wt%, based on the total weight of the polyethylene blend, of the multimodal metallocene catalysed linear low density polyethylene (mLLDPE) and
b) 1.0 to 45.0 wt%, preferably 4.0 wt% to 35.0 wt%, more preferably 6.0 wt% to 25.0 wt% and even more preferably 8.0 wt% to 22.0 wt%, based on the total weight of the polyethylene blend, of the high density polyethylene (ZN-HDPE).

In an embodiment the blend consists of a) and b) only, thus the total amounts of a) + b) summing up to 100 wt%.

*Ad multimodal metallocene catalysed linear low density polyethylene (mLLDPE)*

The multimodal metallocene catalysed linear low density polyethylene (mLLDPE) is referred herein as "multimodal", since the ethylene-1-butene polymer component (A), optionally including ethylene polymer fractions (A-1) and (A-2), and ethylene-1-hexene polymer component (B) have been produced under different polymerization conditions

resulting in different Melt Flow Rates (MFR, e.g. $MFR_2$). I.e. the multimodal PE is multimodal at least with respect to difference in MFR of the ethylene polymer components (A) and (B).

The multimodal metallocene catalysed linear low density polyethylene (mLLDPE) consists of

(i) 30.0 to 70.0 wt% of an ethylene-1-butene polymer component (A), and
(ii) 70.0 to 30.0 wt% of an ethylene-1-hexene polymer component (B).

The amount of (A) and (B) add up to 100.0 wt%.

In an embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same.

The ethylene polymer fractions (A-1) and (A-2) have a $MFR_2$ (190°C, 2.16 kg, ISO 1133) in the range of 10.0 to 300.0 g/10 min, preferably of 20.0 to 250.0 g/10 min, more preferably of 30.0 to 200.0 g/10 min, even more preferably of 40 to 150.0 g/10 min.

The $MFR_2$ of the ethylene polymer components (A) and (B) are different from each other. The ethylene polymer component (A) has a $MFR_2$ (190°C, 2.16 kg, ISO 1133) in the range of 10.0 to 300 g/10 min, preferably of 20.0 to 250.0 g/10 min, more preferably of 30.0 to 200.0 g/10 min, even more preferably of 40 to 150.0 g/10 min.

The ethylene polymer component (B) has a $MFR_2$ (190°C, 2.16 kg, ISO 1133) in the range of 0.001 to 1.0 g/10 min, preferably of 0.005 to 0.9 g/10 min, more preferably of 0.008 to 0.7 g/10 min and even more preferably of 0.01 to 0.5 g/10 min.

The $MFR_2$ (190°C, 2.16 kg, ISO 1133) of the multimodal metallocene catalysed linear low density polyethylene (mLLDPE) is in the range of 0.1 to 5.0 g/10 min, preferably 0.2 to 2.5 g/10 min, more preferably 0.3 to 2.0 g/10 min and even more preferably 0.4 to 1.5.

The multimodal metallocene catalysed linear low density polyethylene (mLLDPE) has a ratio of the $MFR_{21}$ (190°C, 21.6 kg, ISO 1133) to $MFR_2$ (190°C, 2.16 kg, ISO 1133), $MFR_{21}/MFR_2$, in the range of 36 to 60, preferably 38 to 55, more preferably 40 to 52 and even more preferably 42 to 50.

Naturally, in addition to multimodality with respect to, i.e. difference between, the $MFR_2$ of ethylene polymer components (A) and (B), the multimodal metallocene catalysed linear low density polyethylene (mLLDPE) of the invention can also be multimodal e.g. with respect to one or both of the two further properties:
multimodality with respect to, i.e. difference between,

- the comonomer content(s) present in the ethylene polymer components (A) and (B);
  and/or
- the density of the ethylene polymer components (A) and (B).

Preferably, the multimodal metallocene catalysed linear low density polyethylene (mLLDPE) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (mol%) in component B = (comonomer content (mol%) in final product - (weight fraction of component A * comonomer content (mol%) in component A)) / (weight fraction of component B)

The total amount of 1-butene, based on the multimodal metallocene catalysed linear low density polyethylene (mLLDPE), is preferably in the range of from 0.1 to 1.0 mol%, preferably 0.2 to 0.8 mol% and more preferably 0.3 to 0.7 mol%.

The total amount of 1-hexene, based on the multimodal metallocene catalysed linear low density polyethylene (mLLDPE), preferably is in the range of 1.5 to 8.0 mol%, preferably 2.0 to 6.0 mol% and more preferably 2.2 to 4.0 mol%.

The total amount (mol%) of 1-butene, present in the ethylene-1-butene polymer component (A) is of 0.1 to 3.0

mol%, preferably of 0.5 to 2.6 mol%, more preferably of 0.8 to 2.0 mol%, even more preferably of 1.0 to 1.8 mol%, based on the ethylene-1-butene polymer component (A).

The total amount (mol%) of 1-hexene, present in the ethylene-1-hexene polymer component (B) is of 2.5 to 10.0 mol%, preferably of 3.0 to 8.0 mol%, more preferably of 3.5 to 6.0 mol%, based on the ethylene-1-hexene polymer component (B).

Even more preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 925 to 965 $kg/m^3$, preferably of 935 to 955 $kg/m^3$, more preferably of 938 to 950 $kg/m^3$ and/or the density of the ethylene polymer component (B) is of in the range of 880 to 910 $kg/m^3$, preferably of 882 to 908 $kg/m^3$ and more preferably of 885 to 905 $kg/m^3$.

The polymer fractions (A-1) and (A-2) have a density in the range of 925 to 965 $kg/m^3$, preferably of 928 to 955 $kg/m^3$, more preferably of 930 to 950 $kg/m^3$, and most preferred 935 to 945 $kg/m^3$.

The density of polymer fraction (A-1) and (A-2) may be the same or may be different from each other.

The density of the multimodal metallocene catalysed linear low density polyethylene (mLLDPE) is in the range of 910 to 925 $kg/m^3$, preferably of 912 to 922 $kg/m^3$ and more preferably of 914 to 920 $kg/m^3$.

More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 45.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 55.0 wt%.

The multimodal metallocene catalysed linear low density polyethylene (mLLDPE), can be produced in a 2-stage process, preferably comprising a slurry reactor (loop reactor ), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal metallocene catalysed linear low density polyethylene (mLLDPE).

In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The loop reactor 2 is thereby connected in series to a gas phase reactor (GPR), so that the first ethylene polymer component (A) leaving the second slurry reactor is fed to the GPR to produce a multimodal polyethylene copolymer.

Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.

A suitable process is the Borstar **PE** process or the Borstar **PE** 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the first ethylene polymer component (A).

*Catalyst*

The multimodal metallocene catalysed linear low density polyethylene (mLLDPE) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

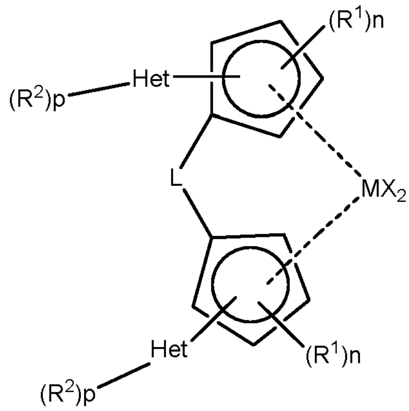

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each R' is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

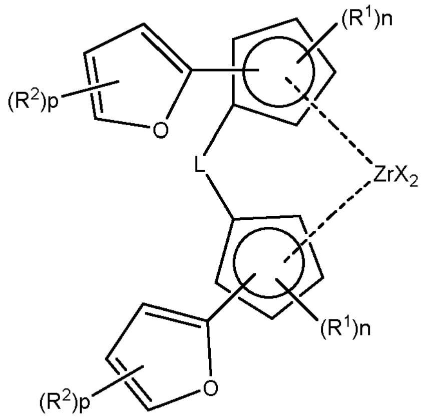

(I´)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

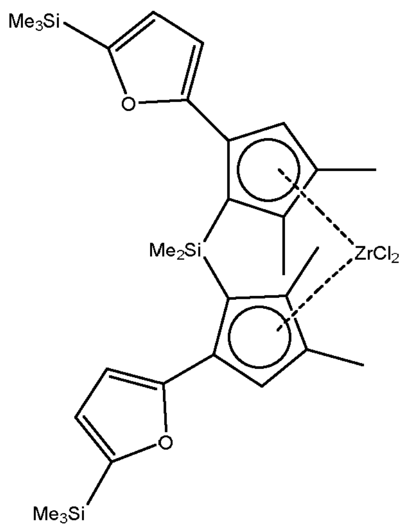

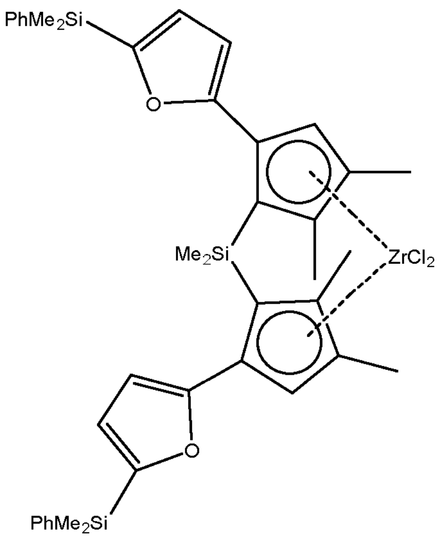

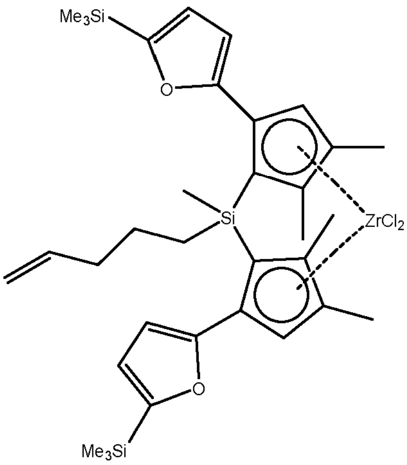

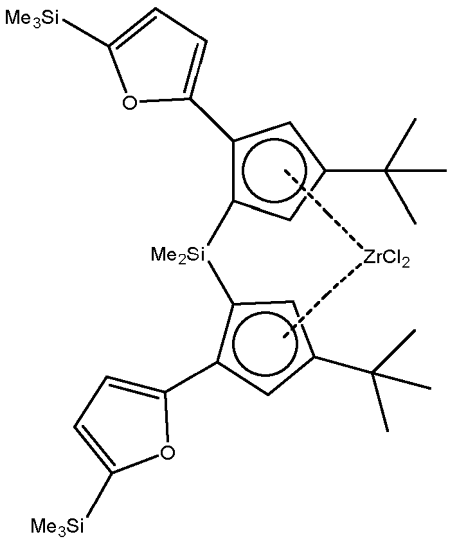

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

*Ad high density polyethylene (ZN-HDPE)*

The polyethylene blend according to the present invention comprises as component b) a ZN-HDPE; whereby said ZN-HDPE has a density determined according to ISO 1183 in the range of 950 to 975 kg/$m^3$ and a $MFR_2$ (190°C, 2.16 kg, ISO 1133) in the range of 0.1 to 2.0 g/10 min.

The $MFR_2$ (190°C, 2.16 kg, ISO 1133) is preferably in the range of 0.2 to 1.8 g/10 min, more preferably in the range of 0.3 to 1.5 g/10 min, even more preferably in the range of 0.5 to 1.0 g/10min.

The ZN-HDPE has a melt flow rate $MFR_5$ (190°C, 5.0 kg, ISO 1133) of 1.0 to 5.0 g/10min, preferably 1.3 to 4.5 g/10min, more preferably 1.7 to 4.0 g/10min and even more preferably, 2.0 to 3.5 g/10min.

The (melt) flow rate ratio FRR21/2 ($MFR_{21}$/$MFR_2$) of the ZN-HDPE is from 30 to 90, preferably from 35 to 85 and most preferably from 40 to 80.

The density determined according to ISO 1183 of the ZN-HDPE is preferably in the range of 952 to 972 kg/$m^3$, more preferably in the range of 955 to 970 kg/$m^3$ and even more preferably in the range of 958 to 965 kg/$m^3$.

Preferably, the ZN-HDPE is an ethylene homopolymer or an ethylene copolymer. An ethylene copolymer is a polymer which comprises ethylene monomer and one or more comonomer(s). The comonomer can be an alpha-olefin

having 4 to 12 carbon atoms, e.g. 1-butene, 4-methyl-1-pentene, 1-hexene, 1-octene, 1-decene.

More preferably, the ZN-HDPE is a copolymer of ethylene and 1-butene, 1-hexene or 1-octene, most preferably 1-butene.

Preferably, the total amount of comonomer(s) present in the HDPE is of 0.0 to 0.40 mol%, more preferably of 0.01 to 0.30 mol% and most preferably 0.02 to 0.20 mol%.

The ZN-HDPE preferably is a multimodal ZN-HDPE, more preferably a bimodal ZN-HDPE.

In a particularly preferred embodiment, the ZN-HDPE comprises, or consists of, a lower molecular weight (LMW) component and a higher molecular weight (HMW) component; wherein the LMW component is an ethylene homopolymer having a density of from 965 to 975 kg/$m^3$ and the HMW component is an ethylene copolymer of ethylene with at least one C4 to C12 alpha-olefin, having a density of from 935 to 955 kg/$m^3$.

The lower molecular weight (LMW) component has a lower molecular weight than the higher molecular weight component and thus higher $MFR_2$ than the higher molecular weight (HMW) component.

The ZN-HDPE used according to the present invention is produced in the presence of a Ziegler-Natta catalyst.

A suitable Ziegler-Natta catalyst contains a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 μm. However, it has turned out that special advantages can be obtained if the support has an average particle size from 15 to 30 μm, preferably from 18 to 25 μm.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794. Alternatively, it can be prepared by first preparing a solution from the components and then contacting the solution with a carrier, as described in WO-A-01/55230.

The above mentioned solid catalyst component is contacted with an aluminium alkyl cocatalyst, which preferably is an aluminium trialkyl compound, after which it can be used in polymerisation. The contacting of the solid catalyst component and the aluminium alkyl cocatalyst can either be conducted prior to introducing the catalyst into the polymerisation reactor, or it can be conducted by introducing the two components separately into the polymerisation reactor.

Suitable Ziegler-Natta catalysts and their production are for example described in EP1378528.

As the multimodal HDPE, resin Borstar® FB5600 as produced by Borouge may be used.

*Polyethylene blend*

The polyethylene blend preferably has a density determined according to ISO 1183 in the range of 912 to 940 kg/$m^3$, more preferably in the range of 915 to 935 kg/$m^3$ and even more preferably in the range of 918 to 930 kg/$m^3$.

The $MFR_2$ (190°C, 2.16 kg, ISO 1133) of the blend is preferably in the range of 0.1 to 2.0 g/10 min, more preferably in the range of 0.2 to 1.8 g/10 min, even more preferably in the range of 0.3 to 1.5 g/10 min, still more preferably in the range of 0.5 to 1.0 g/10min.

As mentioned above, the polyethylene blend according to the present invention provides improved dart drop (impact strength) and an improved balance of stiffness and toughness to films comprising such blends.

The invention is therefore further direct to films comprising the above defined polyethylene blend.

**Film**

The film of the invention comprises at least one layer comprising the above defined polyethylene blend. The film can be a monolayer film comprising the above defined polyethylene blend or a multilayer film, wherein at least one layer comprises the above defined polyethylene blend. The terms "monolayer film" and multilayer film" have well known meanings in the art.

The films are preferably produced by any conventional film extrusion procedure known in the art including cast

film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm. Films of the invention are preferably not stretched in the machine or transverse or biaxial direction.

The films of the invention are characterized by a dart-drop impact strength (DDI) determined according to ASTM D1709, method A on a 40 μm monolayer test blown film of at least 1000 g up to 2500 g, preferably 1200 g up to 2000 g and more preferably 1400 g up to 1700 g.

Films according to the present invention furthermore have good stiffness (tensile modulus measured on a 40 μm monolayer test blown film according to ISO 527-3), i.e. >200 MPa (in both directions).

Thus, the films comprising the above defined polyethylene blend in addition have a tensile modulus (measured on a 40 μm monolayer test blown film according to ISO 527-3) in machine (MD) as well as in transverse (TD) direction in the range of >200 MPa to 700 MPa, preferably of 240 MPa to 550 MPa, more preferably of 250 to 450 MPa.

The inventive films are fully recyclable and thus improves sustainability, as it is in the most preferred embodiment a "100% PE" solution with no other polymer than ethylene based polymers being present.

In another embodiment the inventive film contains at least 90 wt% of PE polymers, more preferably 95 to 99 wt% of PE polymers (difference to 100 wt% can be other polymers than PE), and is thus also suitable for being recycled.

The films according to the present invention are highly useful for being used in various packaging applications, wherein applications related to food packaging are preferred. Furthermore the films according to the present invention may be used as a layer in multilayer polyethylene based blown films, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation* of *$MFR_2$ of Component B and of Fraction (A-2)*

$$logA = x \cdot logB + (1-x) \cdot logC$$

$$C = 10^{\wedge} \frac{(logA - x.logB)}{(1-x)}$$

*For Component B:*

B = $MFR_2$ of Component (A)

C = $MFR_2$ of Component (B)
A = final $MFR_2$ of multimodal metallocene catalysed linear low density polyethylene (mLLDPE)
X = weight fraction of Component (A)

*For Fraction (A-2):*

B = $MFR_2$ of $1^{st}$ fraction (A-1)
C = $MFR_2$ of $2^{nd}$ fraction (A-2)
A = final $MFR_2$ (mixture) of loop polymer (= Component (A))
X = weight fraction of the $1^{st}$ fraction (A-1)

**Density**

Density of the polymer was measured according to ISO 1183-1.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $*B2$ sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * ( fB * 56.11) / ( (fB * 56.11) + (fH * 84.16) + ((1-(fB + fH)) * 28.05) )$$

$$H\ [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.


**Comonomer content of HDPE**

The comonomer content was measured as indicated in WO2019081611, pages 31 to 34.

**Dart drop strength (DDI): Impact resistance by free-falling dart method**

This test method covers the determination of the energy that causes films to fail under specified conditions of impact of a free-falling dart from a specified height that would result in failure of 50 % of the specimens tested (ASTM D1709; Alternative testing technique - method A).

By this technique, successive groups of twenty specimens each are tested. One missile weight is employed for each group and missile weight is varied in increments from group to group.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

Standard conditions:

Conditioning time: > 96 h
Test temperature: 23 °C
Dart head material: phenolic
Dart diameter: 38 mm
Drop height: 660 mm

Results:

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

### Film sample preparation

The test films consisting of the inventive blend and respective comparative films of 40 μm thickness, were prepared using a W&H semi-commercial line. Film samples were produced with BUR 1:3. Melt temperature ~222°C and frost line distance 700 mm, screw speed 126 rpm and take off speed 18.8 m/min. The blends were prepared directly in the line.

### Examples:

*Materials used:*

mLLDPE:

For Comparative Example CE2 (mLLDPE-CE2): Lumicene® Supertough 22ST05, metallocene polyethylene; density 921 kg/m$^3$, $MFR_2$ 0.5 g/10 min.

HDPE:

As HDPE Borstar® FB5600 from Borouge has been used, FB5600 is a bimodal ethylene copolymer, density 960 kg/m$^3$, $MFR_2$ 0.7 g/10 min, $MFR_5$ 2.5 g/10 min, $MFR_{21}$ 42 g/10 min.

### Cat.Example: Catalyst preparation (CAT1 - for inventive Example IE1 and IEs, and for comparative Example CE1)

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

### Catalyst for Comparative Example CE3 (CAT2)

As catalyst CAT2 an alumoxane containing, supported catalyst containing metallocene bis(1-methyl-3-n-butylcyclopentadienyl) zirconium (IV) chloride with enhanced ActivCat® activator technology from Grace was used.

### Polymerization:

Borstar pilot plant with a 3-reactor set-up (loop1 - loop2 - GPR 1) and a prepolymerization loop reactor.

mLLDPEs were produced by using the polymerization conditions as given in Table 1.

**Table 1:** Polymerization conditions for mLLDPEs

| | IE1 mLLDPE-1 | CE1 mLLDPE-CE1 | CE3 mLLDPE-CE3 |
|---|---|---|---|
| **Prepoly reactor** | | | |
| Catalyst | CAT1 | CAT1 | CAT2 |
| Catalyst feed (g/h) | 29.9 | 23.5 | 40 |
| Temp. (°C) | 50 | 50 | 50 |
| Press. (kPa) | 5614 | 5696 | 5735 |
| C2 (kg/h) | 4.0 | 4 | 4 |
| H2(g/h) | 0.03 | 0.03 | 0.04 |
| C4 (g/h) | 93.1 | 85.1 | 80 |
| Split (wt%) | 3.6 | 4.1 | 3.4 |
| **loop 1 Fraction (A-1)** | | | |
| Temp. (°C) | 85 | 85 | 85 |
| Press. (kPa) | 5536 | 5218 | 5537 |
| C2 conc. (mol%) | 4.3 | 3.9 | 3.5 |
| H2/C2 ratio (mol/kmol) | 1.34 | 0.43 | 0.34 |
| C4/C2 ratio (mol/kmol) | 88.0 | 34.6 | 7.6 |
| Split (wt%) | 18.2 | 20.6 | 18 |
| Density (kg/m3) of loop 1 material (fraction (A-1)) | 938.3 | 940 | 947.7 |
| MFR2 (g/10 min) of loop 1 material (fraction (A-1)) | 120.0 | 6.1 | 1.0 |
| **loop 2** | | | |
| Temp. (°C) | 85 | 85 | 85 |
| Press. (kPa) | 5350 | 5332 | 5337 |
| C2 conc. (mol%) | 4.3 | 4.3 | 3.5 |
| H2/C2 ratio (mol/kmol) | 0.85 | 0.4 | 0.03 |
| C4/C2 ratio (mol/kmol) | 62.1 | 30 | 3.7 |
| Split (wt%) | 20.2 | 24.3 | 20 |
| Density (kg/m3) after loop 2 (component (A)) | 941.3 | 938.2 | 951.8 |
| MFR2 (g/10 min) after loop 2 (component (A)) | 122 | 5 | 1.7 |
| MFR2 (g/10 min) of loop 2 material (fraction (A-2)) | 124.2 | 4.1 | 3.0 |
| Density (kg/m3) of loop 2 material (fraction (A-2)) | 944.5 | 936.4 | 958.2 |
| C4 (mol%) after loop 2 material (Component (A)) | 1.43 | 0.61 | 0* |
| **GPR** | | | |
| Temp. (°C) | 75 | 75 | 85 |
| Press. (kPa) | 2000 | 2000 | 2000 |
| H2/C2 ratio (mol/kmol) | 0.77 | 0.68 | 0.1 |
| C6/C2 ratio (mol/kmol) | 10.06 | 8,12 | 10.4 |
| Split (wt%) | 58.1 | 51 | 58.2 |
| MFR2 (g/10 min) of GPR material (Component (B)) | 0.01 | 0.05 | 0.54 |
| Density (kg/m3) of GPR material (Component (B)) | 898.9 | 911.1 | 924.0 |
| C6 (mol%) of GPR material Component (B)) | 4.99 | 3.92 | 0.86 |

* below the detection limit

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of mLLDPEs

| **Material** | **IE1 mLLDPE-1** | **CE1 mLLDPE-CE1** | **CE3 mLLDPE-CE3** |
|---|---|---|---|
| $MFR_2$ (g/10 min) (final) | 0.63 | 0.53 | 0.87 |
| $MFR_{21}$ (g/10 min) | 28.4 | 18.4 | 16.7 |
| $MFR_{21}/MFR_2$ | 45.1 | 34.7 | 19.2 |
| Density (kg/$m^3$) | 916.7 | 924.4 | 935.6 |
| C4 (mol%) | 0.6 | 0.3 | 0 |
| C6 (mol%) | 2.9 | 2.0 | 0.8 |

**Monolayer blown films**

The above produced mLLDPEs were blended with the HDPE directly on the film extrusion line.

The following films have been produced with the above described method (film sample preparation).

**Table 3:** Inventive and Comparative Films

| | | CE1 | CE2 | CE3 | IE1 | IE2 |
|---|---|---|---|---|---|---|
| mLLDPE-CE1 | wt% | 100 | - | - | - | - |
| mLLDPE-CE2 | w% | - | 100 | - | - | - |
| mLLDPE-CE3 | wt% | - | - | 100 | - | - |
| mLLDPE-1 | wt% | - | - | - | 90 | 80 |
| FB5600 | wt% | - | - | - | 10 | 20 |
| | | | | | | |
| blend | | | | | | |
| density | kg/$m^3$ | | | | 921.0 | 925.4 |
| $MFR_2$ | g/10 min | | | | 0.64 | 0.64 |
| | | | | | | |
| Film properties | | | | | | |
| TM/MD | MPa | 235 | 200 | 353 | 260 | 317 |
| TM/TD | MPa | 245 | n.m. | 418 | 311 | 393 |
| Haze | % | n.m. | n.m. | 11.8 | 21.3 | 25.2 |
| DDI | g | 668 | 922 | 152 | 1545 | 1557 |
| n.m. not measured | | | | | | |

The data demonstrates that using the specific mLLDPE, as described above, blended with the specific HDPE leads to an increased DDI and an improved stiffness/impact balance.

This can be also seen in Figures 1 and 2, which show the stiffness and toughness of the films. From the Figures it can be clearly seen the Inventive Examples have clearly higher stiffness and toughness at the same density, indicating not only the potential of material reduction for producing the final articles (possible lower film thicknesses) due to the better stiffness/impact balance, but also the possibility that the final articles have lower weight at the same thickness.

## Claims

1. A polyethylene blend comprising

a) 55.0 wt% to 99.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of 925 to 965 kg/$m^3$,
a $MFR_2$ (190°C, 2.16 kg, ISO 1133) in the range of 10.0 to 300.0 g/10 min,
a 1-butene content in the range of 0.1 to 3.0 mol%, based on the ethylene-1-butene polymer component (A);

the ethylene-1-hexene polymer component (B) has

a density in the range of 880 to 910 kg/$m^3$,
a $MFR_2$ (190°C, 2.16 kg, ISO 1133) in the range of 0.001 to 1.0 g/10 min a 1-hexene content in the range of 2.5 to 10.0 mol% based on the ethylene-1-hexene polymer compound (B);

whereby the multimodal metallocene catalysed linear low density polyethylene (mLLDPE) has

a density in the range of 910 to 925 kg/$m^3$,
a $MFR_2$ (190°C, 2.16 kg, ISO 1133) in the range of 0.1 to 5.0 g/10 min, and

b) 1.0 to 45.0 wt%, based on the total weight of the polyethylene blend, of a high density polyethylene, produced in the presence of a Ziegler-Natta catalyst (ZN-HDPE), whereby said ZN-HDPE has

a density in the range of 950 to 975 kg/$m^3$; and
a $MFR_2$ (190°C, 2.16 kg, ISO 1133) in the range of 0.1 to 2.0 g/10 min.

2. The polyethylene blend according to claim 1, wherein in the multimodal metallocene catalysed linear low density polyethylene (mLLDPE) the ethylene-1-butene polymer component (A) consists of an ethylene polymer fraction (A-1) and an ethylene polymer fraction (A-2),

wherein the density of fractions (A-1) and (A-2) is in the range of 925 to 965 kg/$m^3$, preferably of 928 to 955 kg/$m^3$, more preferably of 930 to 950 kg/$m^3$, and most preferred 935 to 945 kg/$m^3$, and
the $MFR_2$ (190°C, 2.16 kg, ISO 1133) is in the range of 10.0 to 300.0 g/10 min, preferably of 20.0 to 250.0 g/10 min, more preferably of 30.0 to 200.0 g/10 min, even more preferably of 40 to 150.0 g/10 min, and
wherein the density and the $MFR_2$ (190°C, 2.16 kg, ISO 1133) of ethylene polymer fractions (A-1) and (A-2) may be the same or may be different.

3. The polyethylene blend according to claim 1 or 2, wherein in the multimodal metallocene catalysed linear low density polyethylene (mLLDPE)

- the ethylene polymer component (A) has a $MFR_2$ (190°C, 2.16 kg, ISO 1133) of 20.0 to 250.0 g/10 min, preferably of 30.0 to 200.0 g/10 min, more preferably of 40 to 150.0 g/10 min and
- the ethylene polymer component (B) has a $MFR_2$ (190°C, 2.16 kg, ISO 1133) of 0.005 to 0.9 g/10 min, preferably of 0.008 to 0.7 g/10 min and more preferably of 0.01 to 0.5 g/10 min.

4. The polyethylene blend according to any of the preceding claims, wherein in the multimodal metallocene catalysed linear low density polyethylene (mLLDPE) the ratio of the $MFR_{21}$ (190°C, 21.6 kg, ISO 1133) to $MFR_2$ (190°C, 2.16 kg, ISO 1133), $MFR_{21}/MFR_2$ is in the range of 36 to 60, preferably 38 to 55, more preferably 40 to 52 and even more preferably 42 to 50.

5. The polyethylene blend according to any of the preceding claims, wherein the multimodal metallocene catalysed linear low density polyethylene (mLLDPE) is produced in the presence of a metallocene complex of formula (I):

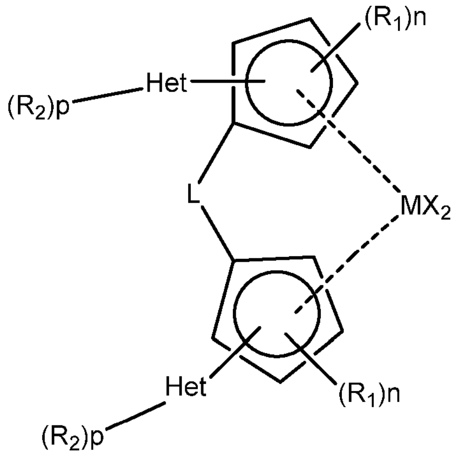

(I)

wherein each X is independently a halogen atom, a $C_{1-6}$-alkyl group, $C_{1-6}$-alkoxy group, phenyl or benzyl group; each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R_2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

6. The polyethylene blend according to any of the preceding claims, wherein the ZN-HDPE has a $MFR_2$ (190°C, 2.16 kg, ISO 1133) in the range of 0.2 to 1.8 g/10 min, preferably in the range of 0.3 to 1.5 g/10 min, more preferably in the range of 0.5 to 1.0 g/10min and
a density in the range of 952 to 972 kg/m$^3$, preferably in the range of 955 to 970 kg/m$^3$ and more preferably in the range of 958 to 965 kg/m$^3$.

7. The polyethylene blend according to any of the preceding claims, wherein the ZN-HDPE has a $MFR_5$ (190°C, 5.0 kg, ISO 1133) of 1.0 to 5.0 g/10min, preferably 1.3 to 4.5 g/10min, more preferably 1.7 to 4.0 g/10min and even preferably 2.0 to 3.5 g/10min and a melt flow rate ratio $MFR_{21}/MFR_2$ from 30 to 90, preferably from 35 to 85 and most preferably from 40 to 80.

8. The polyethylene blend according to any of the preceding claims, wherein the ZN-HDPE is an ethylene homopolymer or an ethylene copolymer which comprises ethylene monomer and one or more comonomer(s) being an alpha-olefin having 4 to 12 carbon atoms, preferably is a copolymer of ethylene and 1-butene, 1-hexene or 1-octene, most preferably 1-butene, whereby the total amount of comonomers present in the ZN-HDPE preferably is of 0.0 to 0.40 mol%, more preferably of 0.01 to 0.30 mol%, and most preferably 0.02 to 0.20 mol%.

9. The polyethylene blend according to any of the preceding claims, wherein the ZN-HDPE is a multimodal HDPE, preferably a bimodal HDPE and comprises, preferably consists of, a lower molecular weight (LMW) component and a higher molecular weight (HMW) component; wherein the LMW component is an ethylene homopolymer having a density of 965 to 975 kg/m$^3$ and the HMW component is an ethylene copolymer of ethylene with at least one C4 to C12 alpha-olefin, having a density of 935 to 955 kg/m$^3$.

10. The polyethylene blend according to any of the preceding claims, wherein the blend consists of

a) 65.0 wt% to 96.0 wt%, preferably 75.0 wt% to 94.0 wt% and more preferably 78.0 wt% to 92.0 wt%, based on the total weight of the polyethylene blend, of the multimodal metallocene catalysed linear low density polyethylene

(mLLDPE) and
b) 4.0 wt% to 35.0 wt%, preferably 6.0 wt% to 25.0 wt% and more preferably 8.0 wt% to 22.0 wt%, based on the total weight of the polyethylene blend, of the high density polyethylene (ZN-HDPE), the total amounts of a) + b) summing up to 100 wt%.

**11.** The polyethylene blend according to any of the preceding claims, wherein the blend has a density in the range of 912 to 940 kg/$m^3$, preferably in the range of 915 to 935 kg/$m^3$ and more preferably in the range of 918 to 930 kg/$m^3$ and a $MFR_2$ (190°C, 2.16 kg, ISO 1133) in the range of 0.1 to 2.0 g/10 min, preferably in the range of 0.2 to 1.8 g/10 min, more preferably in the range of 0.3 to 1.5 g/10 min, still more preferably in the range of 0.5 to 1.0 g/10min.

**12.** Use of a polyethylene blend according to any of the preceding claims for the preparation of a monolayer blown film.

**13.** A monolayer blown film, comprising a polyethylene blend according to any of the preceding claims 1 to 11, wherein the film has a dart-drop impact strength (DDI) determined according to ASTM D1709, method A on a 40 μm monolayer test blown film of at least 1000 g up to 2500 g, preferably 1200 g up to 2000 g and more preferably 1400 g up to 1700 g.

**14.** The monolayer blown film according to claim 13, wherein the film has a tensile modulus (measured on a 40 μm monolayer test blown film according to ISO 527-3) in machine (MD) as well as in transverse (TD) direction in the range of >200 MPa to 700 MPa, preferably of 240 MPa to 550 MPa, more preferably of 250 to 450 MPa.

**15.** Use of a film according to any of the preceding claims 13 to 14 as packing material, in particular as a packing material for food or as a layer in multilayer polyethylene based blown films, preferably as core layer in multilayer polyethylene based blown films.

**Patentansprüche**

**1.** Polyethylenmischung, umfassend

a) 55,0 Gew.-% bis 99,0 Gew.-%, basierend auf dem Gesamtgewicht der Polyethylenmischung, eines multimodalen metallocenkatalysierten linearen Polyethylens niedriger Dichte (mLLDPE), das besteht aus

(i) 30,0 bis 70,0 Gew.-% einer Ethylen-1-Buten-Komponente (A) und
(ii) 70,0 bis 30,0 Gew.-% einer Ethylen-1-Hexen-Polymerkomponente (B),

wobei die Ethylen-1-Buten-Polymerkomponente (A) aufweist

eine Dichte im Bereich von 925 bis 965 kg/$m^3$
einen $MFR_2$ (190 °C, 2,16 kg, ISO 1133) im Bereich von 10,0 bis 300,0 g/10 min,
einen 1-Buten-Gehalt im Bereich von 0,1 bis 3,0 Mol-%, basierend auf der Ethylen-1-Buten-Komponente (A);

die Ethylen-1-hexen-Polymerkomponente (B) aufweist

eine Dichte im Bereich von 880 bis 910 kg/$m^3$,
einen $MFR_2$ (190 °C, 2,16 kg, ISO 1133) im Bereich von 0,001 bis 1,0 g/10 min
einen 1-Hexen-Gehalt im Bereich von 2,5 bis 10,0 Mol-%, basierend auf der Ethylen-1-Hexen-Verbindung (B);

wobei das multimodale metallocenkatalysierte lineare Polyethylen niedriger Dichte (mLLDPE) aufweist

eine Dichte im Bereich von 910 bis 925 kg/$m^3$,
einen $MFR_2$ (190 °C, 2,16 kg, ISO 1133) im Bereich von 0,1 bis 5,0 g/10 min und

b) 1,0 bis 45,0 Gew.-%, basierend auf dem Gesamtgewicht der Polyethylenmischung, eines in Gegenwart eines Ziegler-Natta-Katalysators hergestellten Polyethylens hoher Dichte (ZN-HDPE), wobei das ZN-HDPE aufweist

eine Dichte im Bereich von 950 bis 975 kg/$m^3$ und

einen $MFR_2$ (190 °C, 2,16 kg, ISO 1133) im Bereich von 0,1 bis 2,0 g/10 min.

**2.** Polyethylenmischung nach Anspruch 1, wobei in dem multimodalen metallocenkatalysierten linearen Polyethylen niedriger Dichte (mLLDPE) die Ethylen-1-Buten-Komponente (A) aus einer Ethylenpolymerfraktion (A-1) und einer Ethylenpolymerfraktion (A-2) besteht,

wobei die Dichte der Fraktionen (A-1) und (A-2) im Bereich von 925 bis 965 $kg/m^3$, bevorzugt von 928 bis 955 $kg/m^3$, stärker bevorzugt von 930 bis 950 $kg/m^3$ und am stärksten bevorzugt von 935 bis 945 $kg/m^3$ liegt, und der $MFR_2$ (190 °C, 2,16 kg, ISO 1133) im Bereich von 10,0 bis 300,0 g/10 min, bevorzugt von 20,0 bis 250,0 g/10 min, stärker bevorzugt von 30,0 bis 200,0 g/10 min, am meisten bevorzugt von 40 bis 150,0 g/10 min liegt, und wobei die Dichte und der $MFR_2$ (190 °C, 2,16 kg, ISO 1133) der Ethylenpolymerfraktionen (A-1) und (A-2) gleich oder unterschiedlich sein können.

**3.** Polyethylenmischung nach Anspruch 1 oder 2, wobei in dem multimodalen metallocenkatalysierten linearen Polyethylen niedriger Dichte (mLLDPE)

- die Ethylenpolymerkomponente (A) einen $MFR_2$ (190 °C, 2,16 kg, ISO 1133) von 20,0 bis 250,0 g/10 min, bevorzugt von 30,0 bis 200,0 g/10 min, stärker bevorzugt von 40 bis 150,0 g/10 min aufweist und
- die Ethylenpolymerkomponente (B) einen $MFR_2$ (190 °C, 2,16 kg, ISO 1133) von 0,005 bis 0,9 g/10 min, bevorzugt von 0,008 bis 0,7 g/10 min und stärker bevorzugt von 0,01 bis 0,5 g/10 min aufweist.

**4.** Polyethylenmischung nach einem der vorstehenden Ansprüche, wobei in dem multimodalen metallocenkatalysierten linearen Polyethylen niedriger Dichte (mLLDPE) das Verhältnis vom $MFR_{21}$ (190 °C, 21,6 kg, ISO 1133) zum $MFR_2$ (190 °C, 2,16 kg, ISO 1133) $MFR_{21}/MFR_2$ im Bereich von 36 bis 60, bevorzugt 38 bis 55, stärker bevorzugt 40 bis 52 und noch stärker bevorzugt 42 bis 50 liegt.

**5.** Polyethylenmischung nach einem der vorstehenden Ansprüche, wobei das multimodale metallocenkatalysierte lineare Polyethylen niedriger Dichte (mLLDPE) in Gegenwart eines Metallocenkomplexes der Formel (I) hergestellt wird:

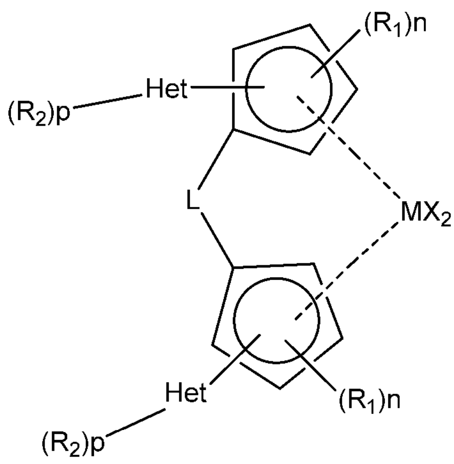

(I)

wobei jedes X unabhängig voneinander ein Halogenatom, eine $C_{1-6}$-Alkylgruppe, eine $C_{1-6}$-Alkoxygruppe, eine Phenyl- oder Benzylgruppe ist;
jedes Het unabhängig voneinander eine monocyclische heteroaromatische Gruppe ist, die mindestens ein aus O oder S ausgewähltes Heteroatom enthält;
L $-R'_2Si-$ ist, wobei jedes R' unabhängig voneinander $C_{1-20}$-Hydrocarbyl oder $C_{1-10}$-Alkyl ist, substituiert mit Alkoxy mit 1 bis 10 Kohlenstoffatomen;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder $-Si(R)_3$-Gruppe ist;
jedes R eine $C_{1-10}$-Alkyl- oder Phenylgruppe ist, die optional mit 1 bis 3 $C_{1-6}$-Alkylgruppen substituiert ist; und
jedes p 0 bis 1 ist.

6. Polyethylenmischung nach einem der vorstehenden Ansprüche, wobei das ZN-HDPE einen $MFR_2$ (190 °C, 2,16 kg, ISO 1133) im Bereich von 0,2 bis 1,8 g/10 min, bevorzugt im Bereich von 0,3 bis 1,5 g/10 min, stärker bevorzugt im Bereich von 0,5 bis 1,0 g/10 min und
eine Dichte im Bereich von 952 bis 972 kg/$m^3$, bevorzugt im Bereich von 955 bis 970 kg/$m^3$ und stärker bevorzugt im Bereich von 958 bis 965 kg/$m^3$ aufweist.

7. Polyethylenmischung nach einem der vorstehenden Ansprüche, wobei das ZN-HDPE einen $MFR_5$ (190 °C, 5,0 kg, ISO 1133) von 1,0 bis 5,0 g/10 min, bevorzugt 1,3 bis 4,5 g/10 min, stärker bevorzugt 1,7 bis 4,0 g/10 min und noch stärker bevorzugt 2,0 bis 3,5 g/10 min und ein Schmelzindexverhältnis $MFR_{21}/MFR_2$ von 30 bis 90, bevorzugt von 35 bis 85 und am stärksten bevorzugt von 40 bis 80 aufweist.

8. Polyethylenmischung nach einem der vorstehenden Ansprüche, wobei das ZN-HDPE ein Ethylenhomopolymer oder ein Ethylencopolymer ist, das Ethylenmonomer und ein oder mehrere Comonomere umfasst, die ein Alpha-Olefin mit 4 bis 12 Kohlenstoffatomen sind, bevorzugt ein Copolymer aus Ethylen und 1-Buten, 1-Hexen oder 1-Octen, am stärksten bevorzugt 1-Buten, wobei die Gesamtmenge der im ZN-HDPE vorhandenen Comonomere bevorzugt 0,0 bis 0,40 Mol-%, stärker bevorzugt 0,01 bis 0,30 Mol-% und am stärksten bevorzugt 0,02 bis 0,20 Mol-% beträgt.

9. Polyethylenmischung nach einem der vorstehenden Ansprüche, wobei das ZN-HDPE ein multimodales HDPE, bevorzugt ein bimodales HDPE ist und eine Komponente mit niedrigerem Molekulargewicht (LMW) und eine Komponente mit höherem Molekulargewicht (HMW) umfasst, bevorzugt daraus besteht; wobei die LMW-Komponente ein Ethylenhomopolymer mit einer Dichte von 965 bis 975 kg/$m^3$ ist und die HMW-Komponente ein Ethylencopolymer aus Ethylen mit mindestens einem C4- bis C12-alpha-Olefin mit einer Dichte von 935 bis 955 kg/$m^3$ ist.

10. Polyethylenmischung nach einem der vorstehenden Ansprüche, wobei die Mischung besteht aus

a) 65,0 Gew.-% bis 96,0 Gew.-%, bevorzugt 75,0 Gew.-% bis 94,0 Gew.-% und stärker bevorzugt 78,0 Gew.-% bis 92,0 Gew.-%, basierend auf dem Gesamtgewicht der Polyethylenmischung, des multimodalen metallocenkatalysierten linearen Polyethylens niedriger Dichte (mLLDPE) und
b) 4,0 Gew.-% bis 35,0 Gew.-%, bevorzugt 6,0 Gew.-% bis 25,0 Gew.-% und stärker bevorzugt 8,0 Gew.-% bis 22,0 Gew.-%, basierend auf dem Gesamtgewicht der Polyethylenmischung, des Polyethylens hoher Dichte (ZN-HDPE), wobei sich die Gesamtmengen von a) + b) auf 100 Gew.-% summieren.

11. Polyethylenmischung nach einem der vorstehenden Ansprüche, wobei die Mischung eine Dichte im Bereich von 912 bis 940 kg/$m^3$, bevorzugt im Bereich von 915 bis 935 kg/$m^3$ und stärker bevorzugt im Bereich von 918 bis 930 kg/$m^3$ und
einen $MFR_2$ (190 °C, 2,16 kg, ISO 1133) im Bereich von 0,1 bis 2,0 g/10 min, bevorzugt im Bereich von 0,2 bis 1,8 g/10 min, stärker bevorzugt im Bereich von 0,3 bis 1,5 g/10 min, noch stärker bevorzugt im Bereich von 0,5 bis 1,0 g/10 min aufweist.

12. Verwendung einer Polyethylenmischung gemäß einem der vorstehenden Ansprüche zum Anfertigen einer einlagigen Blasfolie.

13. Einlagige Blasfolie, die eine Polyethylenmischung nach einem der vorstehenden Ansprüche 1 bis 11 umfasst, wobei die Folie eine Dart-Drop-Schlagfestigkeit (DDI), die gemäß ASTM D1709, Methode A auf einer 40 μm dicken einlagigen Testblasfolie bestimmt wird, von mindestens 1000 g bis zu 2500 g, bevorzugt 1200 g bis zu 2000 g und stärker bevorzugt 1400 g bis zu 1700 g aufweist.

14. Einlagige Blasfolie nach Anspruch 13, wobei die Folie einen Zugmodul (gemessen an einer 40 μm einlagigen Testblasfolie gemäß ISO 527-3) sowohl in Maschinenrichtung (MD) als auch in Querrichtung (TD) im Bereich von >200 MPa bis 700 MPa, bevorzugt von 240 MPa bis 550 MPa, stärker bevorzugt von 250 bis 450 MPa aufweist.

15. Verwendung einer Folie nach einem der vorstehenden Ansprüche 13 bis 14 als Verpackungsmaterial, insbesondere als ein Verpackungsmaterial für Lebensmittel oder als eine Schicht in mehrschichtigen Polyethylen-Blasfolien, stärker bevorzugt als Kernschicht in mehrschichtigen Polyethylen-Blasfolien.

## Revendications

1. Mélange de polyéthylènes comprenant

    a) 55,0 % en poids à 99,0 % en poids, sur la base du poids total du mélange de polyéthylènes, d'un polyéthylène basse densité linéaire catalysé par un métallocène multimodal (mLLDPE) qui est constitué par

        (i) 30,0 à 70,0 % en poids d'un composant polymère d'éthylène-1-butène (A), et
        (ii) 70,0 à 30,0 % en poids d'un composant polymère d'éthylène-1-hexène (B),

            le composant polymère d'éthylène-1-butène (A) possédant
            une densité dans la plage de 925 à 965 kg/$m^3$,
            un $MFR_2$ (190 °C, 2,16 kg, ISO 1133) dans la plage de 10,0 à 300,0 g/10 min,
            une teneur en 1-butène dans la plage de 0,1 à 3,0 % en moles, par rapport au composant polymère d'éthylène-1-butène (A) ;
            le composant polymère d'éthylène-1-hexène (B) possédant
            une densité dans la plage de 880 à 910 kg/$m^3$,
            un $MFR_2$ (190 °C, 2,16 kg, ISO 1133) dans la plage de 0,001 à 1,0 g/10 min,
            une teneur en 1-hexène dans la plage de 2,5 à 10,0 % en moles sur la base du composé polymère d'éthylène-1-hexène (B) ;
            le polyéthylène basse densité linéaire catalysé par un métallocène multimodal (mLLDPE) possédant
            une densité dans la plage de 910 à 925 kg/$m^3$,
            un $MFR_2$ (190 °C, 2,16 kg, ISO 1133) dans la plage de 0,1 à 5,0 g/10 min et

    b) 1,0 à 45,0 % en poids, sur la base du poids total du mélange de polyéthylènes, d'un polyéthylène haute densité, produit en présence d'un catalyseur Ziegler-Natta (ZN-HDPE), ledit Zn-HDPE possédant

        une densité dans la plage de 950 à 975 kg/$m^3$ ; et
        un $MFR_2$ (190 °C, 2,16 kg, ISO 1133) dans la plage de 0,1 à 2,0 g/10 min.

2. Mélange de polyéthylènes selon la revendication 1, dans lequel dans le polyéthylène basse densité linéaire catalysé par un métallocène multimodal (mLLDPE) le composant polymère d'éthylène-1-butène (A) est constitué d'une fraction de polymère d'éthylène (A-1) et d'une fraction de polymère d'éthylène (A-2),

    la densité des fractions (A-1) et (A-2) étant dans la plage de 925 à 965 kg/$m^3$, de préférence de 928 à 955 kg/$m^3$, plus préférablement de 930 à 950 kg/$m^3$, et le plus préférablement 935 à 945 kg/$m^3$ et
    le $MFR_2$ (190 °C, 2,16 kg, ISO 1133) étant dans la plage de 10,0 à 300,0 g/10 min, de préférence de 20,0 à 250,0 g/10 min, plus préférablement de 30,0 à 200,0 g/10 min et encore plus préférablement de 40 à 150,0 g/10 min, et dans lequel la densité et le $MFR_2$ (190 °C, 2,16 kg, ISO 1133) des fractions de polymères d'éthylène (A-1) et (A-2) peut être identique ou différente.

3. Mélange de polyéthylènes selon la revendication 1 ou 2, dans lequel, dans le polyéthylène basse densité linéaire catalysé par un métallocène multimodal (mLLDPE)

    - le composant polymère d'éthylène (A) a un $MFR_2$ (190 °C, 2,16 kg, ISO 1133) de 20,0 à 250,0 g/10 min, de préférence de 30,0 à 200,0 g/10 min et plus préférablement de 40 à 150,0 g/10 min et
    - le composant polymère d'éthylène (B) possède un $MFR_2$ (190 °C, 2,16 kg, ISO 1133) de 0,005 à 0,9 g/10 min, de préférence de 0,008 à 0,7 g/10 min et plus préférablement de 0,01 à 0,5 g/10 min.

4. Mélange de polyéthylènes selon l'une quelconque des revendications précédentes, dans lequel, dans le polyéthylène basse densité linéaire catalysé par un métallocène multimodal (mLLDPE), le rapport du $MFR_{21}$ (190 °C, 21,6 kg, ISO 1133) sur $MFR_2$ (190 °C, 2,16 kg, ISO 1133), $MFR_{21}/MFR_2$ est dans la plage de 36 à 60, de préférence 38 à 55, plus préférablement 40 à 52 et encore plus préférablement 42 à 50.

5. Mélange de polyéthylènes selon l'une quelconque des revendications précédentes, dans lequel le polyéthylène basse densité linéaire catalysé par un métallocène multimodal (mLLDPE) est produit en présence d'un complexe de métallocène de formule (I) :

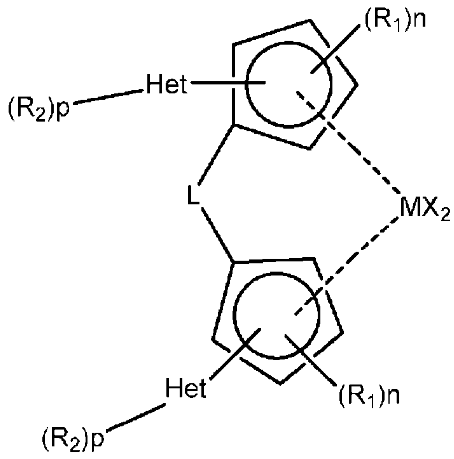

(I)

chaque X étant indépendamment un atome d'halogène, un groupe $C_{1-6}$-alkyle, un groupe $C_{1-6}$-alcoxy, un groupe phényle ou benzyle ;
chaque Het étant indépendamment un groupe hétéroaromatique monocyclique contenant au moins un hétéroatome choisi parmi O ou S ;
L étant -$R'_2$Si-, chaque R' étant indépendamment $C_{1-20}$-hydrocarbyle ou $C_{1-10}$-alkyle substitué par alcoxy ayant 1 à 10 atomes de carbone ;
M étant Ti, Zr ou Hf ;
chaque $R_1$ étant identique ou différent et étant un groupe $C_{1-6}$-alkyle ou $C_{1-6}$-alcoxy ;
chaque n étant 1 à 2 ;
chaque $R_2$ étant identique ou différent et étant un groupe $C_{1-6}$-alkyle, un groupe $C_{1-6}$-alcoxy ou un groupe -Si(R)$_3$ ;
chaque R étant un groupe $C_{1-10}$-alkyle ou phényle éventuellement substitué par 1 à 3 groupes $C_{1-6}$-alkyle ; et chaque p étant 0 à 1.

**6.** Mélange de polyéthylènes selon l'une quelconque des revendications précédentes, dans lequel ZN-HDPE a un $MFR_2$ (190 °C, 2,16 kg, ISO 1133) dans la plage de 0,2 à 1,8 g/10 min, de préférence dans la plage de 0,3 à 1,5 g/10 min, plus préférablement dans la plage de 0,5 à 1,0 g/10 min et
une densité dans la plage de 952 à 972 kg/$m^3$, de préférence dans la plage de 955 à 970 kg/$m^3$, et plus préférablement dans la plage de 958 à 965 kg/$m^3$.

**7.** Mélange de polyéthylènes selon l'une quelconque des revendications précédentes, dans lequel le ZN-HDPE a un $MFR_5$ (190 °C, 5,0 kg, ISO 1133) de 1,0 à 5,0 g/10 min, de préférence de 1,3 à 4,5 g/10 min, plus préférablement de 1,7 à 4,0 g/10 min et encore préférablement de 2,0 à 3,5 g/10 min et un rapport d'indices de fluidité à l'état fondu $MFR_{21}/MFR_2$ de 30 à 90, de préférence de 35 à 85 et le plus préférablement de 40 à 80.

**8.** Mélange de polyéthylènes selon l'une quelconque des revendications précédentes, dans lequel le ZN-HDPE est un homopolymère d'éthylène ou un copolymère d'éthylène qui comprend un monomère d'éthylène et un ou plusieurs comonomères qui sont une alpha-oléfine ayant 4 à 12 atomes de carbone, de préférence est un copolymère d'éthylène et de 1-butène, de 1-hexène ou de 1-octène, de manière la plus préférée 1-butène, la quantité totale de comonomères présents dans le ZN-HDPE étant de préférence de 0,0 à 0,40 % en moles, plus préférablement de 0,01 à 0,30 % en moles, et de manière la plus préférée 0,02 à 0,20 % en moles.

**9.** Mélange de polyéthylènes selon l'une quelconque des revendications précédentes, dans lequel le ZN-HDPE est un HDPE multimodal, de préférence un HDPE bimodal et comprend, de préférence est constitué de, un composant de poids moléculaire inférieur (LMW) et un composant de poids moléculaire supérieur (HMW) ; dans lequel le composant LMW est un homopolymère d'éthylène ayant une densité de 965 à 975 kg/$m^3$ et le composant HMW est un copolymère d'éthylène d'éthylène avec au moins une alpha-oléfine en C4 à C12, ayant une densité de 935 à 955 kg/$m^3$.

**10.** Mélange de polyéthylènes selon l'une quelconque des revendications précédentes, dans lequel le mélange est constitué par

a) 65,0 % en poids à 96,0 % en poids, de préférence 75,0 % en poids à 94,0 % en poids et plus préférentiellement

78,0 % en poids à 92,0 % en poids, sur la base du poids total du mélange de polyéthylènes, du polyéthylène basse densité linéaire catalysé par un métallocène multimodal (mLLDPE) et
b) 4,0 % en poids à 35,0 % en poids, préférablement 6,0 % en poids à 25,0 % en poids et plus préférablement 8,0 % en poids à 22,0 % en poids, sur la base du poids total du mélange de polyéthylènes, du polyéthylène haute densité (ZN-HDPE), les quantités totales de a) + b) totalisant jusqu'à 100 % en poids.

**11.** Mélange de polyéthylènes selon l'une quelconque des revendications précédentes, dans lequel le mélange a une densité dans la plage de 912 à 940 kg/$m^3$, de préférence dans la plage de 915 à 935 kg/$m^3$ et plus préférablement dans la plage de 918 à 930 kg/$m^3$ et
un $MFR_2$ (190 °C, 2,16 kg, ISO 1133) dans la plage de 0,1 à 2,0 g/10 min, de préférence dans la plage de 0,2 à 1,8 g/10 min, plus préférablement de 0,3 à 1,5 g/10 min, encore plus préférablement dans la plage de 0,5 à 1,0 g/10 min.

**12.** Utilisation d'un mélange de polyéthylènes selon l'une quelconque des revendications précédentes pour la préparation d'un film soufflé monocouche.

**13.** Film soufflé monocouche, comprenant un mélange de polyéthylènes selon l'une quelconque des revendications précédentes 1 à 11, dans lequel le film a une résistance à l'impact de chute au mouton (DDI) déterminée conformément à la norme ASTM D1709, méthode A sur un film soufflé de test monocouche de 40 μm d'au moins 1000 g jusqu'à 2500 g, de préférence 1200 g jusqu'à 2000 g et plus préférablement 1400 g jusqu'à 1700 g.

**14.** Film soufflé monocouche selon la revendication 13, dans lequel le film a un module de traction (mesuré sur un film d'essai soufflé monocouche de 40 μm selon la norme ISO 527-3) dans le sens machine (MD) ainsi que dans le sens transversal (TD) dans la plage de > 200 MPa à 700 MPa, de préférence de 240 MPa à 550 MPa, plus préférablement de 250 à 450 MPa.

**15.** Utilisation d'un film selon l'une quelconque des revendications 13 à 14 précédentes comme matériau d'emballage, en particulier comme matériau d'emballage pour produit alimentaire ou comme couche dans des films soufflés à base de polyéthylène multicouche, de préférence comme couche centrale dans des films soufflés à base de polyéthylène multicouche.

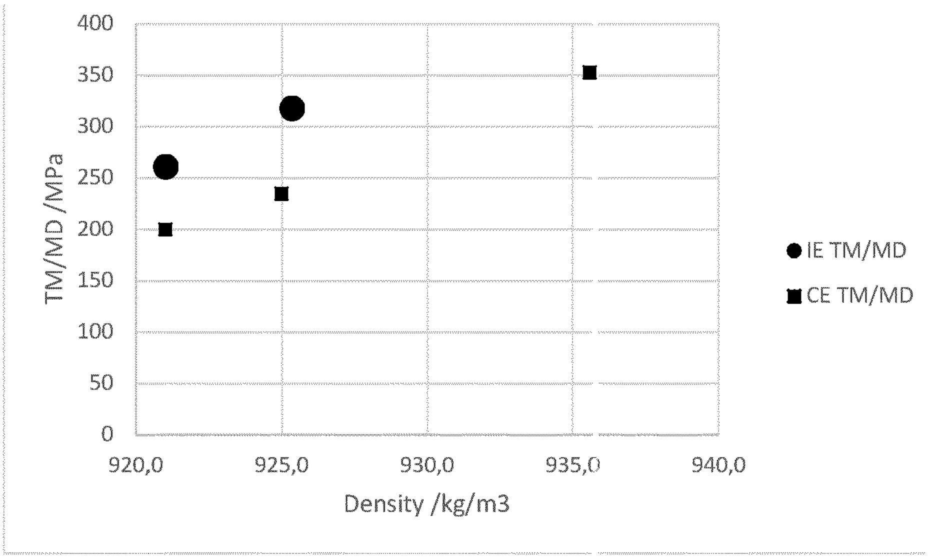


Figure 1: Stiffness vs density

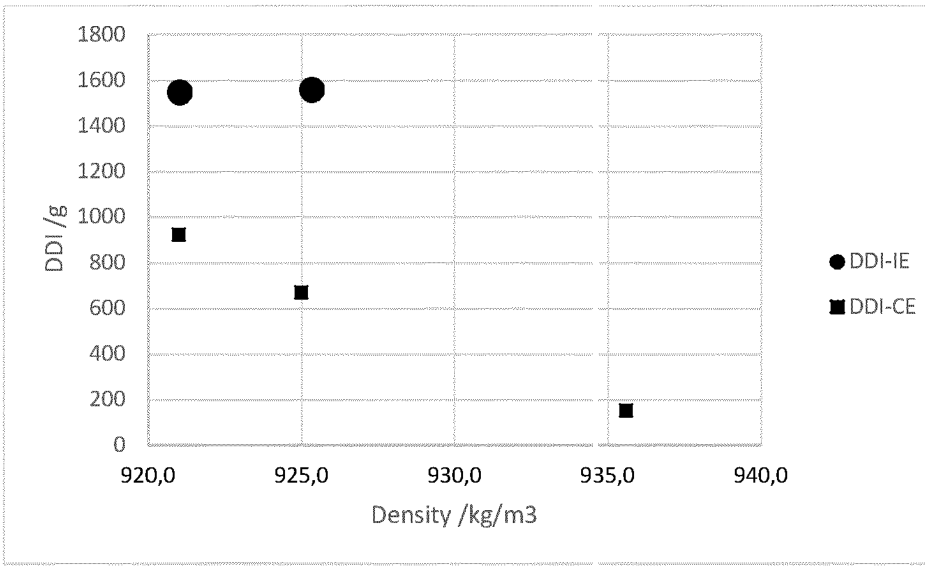


Figure 2: Toughness vs density

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022018239 A1
- EP 3298067 A1
- WO 2021191019 A1
- US 10494465 B2
- WO 2016198273 A
- WO 2021009189 A
- WO 2021009190 A
- WO 2021009191 A
- WO 2021009192 A
- EP 688794 A
- WO 0155230 A
- EP 1378528 A
- WO 2019081611 A


### Non-patent literature cited in the description


- **KLIMKE, K.** ; **PARKINSON, M.** ; **PIEL, C** ; **KAMINSKY, W.** ; **SPIESS, H.W** ; **WILHELM, M**. *Macromol. Chem. Phys.*, 2006, vol. 207, 382
- **PARKINSON, M** ; **KLIMKE, K.** ; **SPIESS, H.W** ; **WILHELM, M**. *Macromol. Chem. Phys.*, 2007, vol. 208, 2128
- **POLLARD, M.** ; **KLIMKE, K.** ; **GRAF, R** ; **SPIESS, H.W.** ; **WILHELM, M** ; **SPERBER, O.** ; **PIEL, C** ; **KAMINSKY, W.** *Macromolecules*, 2004, vol. 37, 813
- **FILIP, X.** ; **TRIPON, C.** ; **FILIP, C**. *J. Mag. Resn.*, 2005, vol. 176, 239
- **GRIFFIN, J.M.** ; **TRIPON, C.** ; **SAMOSON, A** ; **FILIP, C** ; **BROWN, S.P.** *Mag. Res. in Chem.*, 2007, vol. 45, S1, S198
- **CASTIGNOLLES, P** ; **GRAF, R** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R** ; **MONACO, G.** ; **VACATELLO, M.** ; **SEGRE, A.L**. *Macromoleucles*, 1997, vol. 30, 6251
- **ZHOU, Z.** ; **KUEMMERLE, R** ; **QIU, X** ; **REDWINE, D** ; **CONG, R** ; **TAHA, A.** ; **BAUGH, D** ; **WINNIFORD, B.** *J. Mag. Reson.*, 2007, vol. 187, 225
- **BUSICO, V** ; **CARBONNIERE, P.** ; **CIPULLO, R** ; **PELLECCHIA, R** ; **SEVERN, J.** ; **TALARICO, G**. *Macromol. Rapid Commun*, 2007, vol. 28, 1128
- **RESCONI, L** ; **CAVALLO, L.** ; **FAIT, A.** ; **PIEMONTESI, F**. *Chem. Rev.*, 2000, vol. 100, 1253